# EUROPÄISCHE PATENTSCHRIFT

(11) **EP 2 260 228 B1**
(45) Veröffentlichungstag und Bekanntmachung des Hinweises auf die Patenterteilung: **14.12.2011**
(21) Anmeldenummer: 08801072.3
(22) Anmeldetag: 26.07.2008
(51) Int. Cl.: F16L 55/07, E03B 3/28, F24F 13/22

(54) **RÜCKSTANDSSAMMLER**
RESIDUE COLLECTOR
COLLECTEUR DE RÉSIDUS

(30) Priorität: 13.03.2008 DE 202008003576 U
(43) Veröffentlichungstag der Anmeldung: 15.12.2010
(73) Patentinhaber: Vacuflex GmbH, 64546 Mörfelden-Walldorf (DE)
(72) Erfinder: GREGER, Peter, 63546 Hammersbach (DE)
(74) Vertreter: Pöhner, Wilfried Anton
(86) Internationale Anmeldenummer: PCT/DE2008/001233
(87) Internationale Veröffentlichungsnummer: WO 2009/112002

(56) Entgegenhaltungen:
- DE-A1- 2 918 057
- DE-C1- 10 127 796
- US-A1- 2007 144 198

## Beschreibung

Die Erfindung bezieht sich auf einen Rückstandssammler gemäss dem Obergriff des Anspruchs 1. Das Dokument DE 2918057 entspricht dem Oberbegriff des Anspruchs 1, und wird als nächstliegender Stand der Technik angesehen. In DE10127796 wird ein Rohrkanal mit Auffangrinne für Kanalkondensate offenbart.

In Schläuchen, durch die Flüssigkeit oder ein Gemisch aus Luft und Flüssigkeit angesaugt wird, verbleiben nach dem Abschalten des Unterdruckes stets gewisse Reste. Diese Reste sind bei einem gewellten Schlauch oder bei einem Schlauch, der mit Rippen oder mit einer spiralig umlaufenden Rippe verstärkt ist, viel größer als bei glatten Schläuchen und führen zu dem oft sehr störenden Effekt, dass aus einem Ansaugschlauch nach dem Abschalten der letzte Rest der soeben angesaugten Flüssigkeit wieder heraus läuft. Insbesondere bei senkrecht verlaufenden Schläuchen, aber auch schon bei nur leicht geneigten Schläuchen tritt dieser Effekt auf.

Nach aktuellem Stand der Technik sind zur Abhilfe dieses Problems Klappen bekannt, die ganz kurz vor dem Abschalten des Unterdrucks die Ansaugöffnung flüssigkeitsdicht verschließen und dadurch nach dem Abschalten eventuell zurücklaufende Flüssigkeiten am Austreten hindern. Nachteilig ist jedoch nicht nur der erhöhte Bauaufwand für die Klappen, der zusätzliche Aufwand für das Ansteuern der Klappe sondern auch die Notwendigkeit, die oberhalb der Klappe gesammelte Flüssigkeit in einem zusätzlichen Arbeitsgang mit einem zusätzlichen Auffanggefäß zu entsorgen.

Eine andere, auf aktuellem Stand der Technik weithin bekannte Problemlösung ist der Siphon, ein S-förmig verlaufender Rohrabschnitt, dessen nach unten weisender Rohrbogen so stark gekrümmt ist, dass sich darin Flüssigkeit ablagert, die nicht mehr herausfließen kann. Wenn ein solcher Siphon beim Abschalten des Unterdruckes unbefüllt ist, so können sich darin noch im Schlauch befindliche Restflüssigkeiten sammeln.

Nachteilig ist jedoch, dass beim Wiederaufbau des Unterdruckes der Schlauch durch die Flüssigkeit im Siphon luftdicht abgeschottet ist, sodass die Ansaugpumpe zu Beginn einen so hohen Unterdruck aufbauen muss, dass sie die gesamte Flüssigkeit aus dem Siphonbogen herausbewegen kann. Erst dann kann der Unterdruckschlauch wieder von außen Flüssigkeit aufnehmen.

Je kleiner - bei gleich bleibendem Durchmesser des Rohres - der Krümmungsradius des Siphonbogens gewählt wird, desto kleiner ist die darin gespeicherte Flüssigkeitsmenge und desto niedriger der Schwellwert des Unterdruckes vor dem erstmaligen Absaugen. Bei einem so stark gekrümmten Siphon ist jedoch sein erhöhter Strömungswiderstand nachteilig, und zwar während des Betriebes auf Dauer, wohingegen ein Siphon mit sehr großem Krümmungsradius nur beim Anlaufen einen hohen Wert des Unterdruckes erfordert und im Dauerbetrieb nur einen geringen Strömungswiderstand erzeugt.

Auf diesem Hintergrund hat sich die Erfindung die Aufgabe gestellt, einen Rückstandssammler für Unterdruckschläuche zu entwickeln, der wenig Bauraum beansprucht, beim erstmaligen Einschatten einen praktisch ungehinderten Strömungsverlauf ermöglicht und im Dauerbetrieb dem Flüssigkeitsstrom keinen sehr viel größeren Widerstand entgegenstellt als das Rohr alleine.

Als Lösung präsentiert die Erfindung einen ückstandssammler, bei dem das Material der Ausstülpung derart flexibel und die Wandstärke der Ausstülpung derart eingestellt ist, dass sie durch Unterdruck zumindest zum größten Teil in den Hohlraum einstülpbar ist.

Die Funktion des erfindungsgemäßen Rückstandssammlers unterscheidet sich vom bekannten Siphon dadurch, dass im Ruhezustand der gesamte Querschnitt des Schlauches vollständig frei ist, sodass sich beim Einschalten des Vakuumerzeugers keine erhöhte Belastung durch das Herausbewegen der Flüssigkeitsmenge aus dem Siphon ergibt. Vielmehr kann der Vakuumerzeuger im Leerlauf starten, was für seine Lebensdauer und für seinen Energieverbrauch positiv ist.

Mit allmählich sich aufbauendem Druck bewegt sich die Ausstülpung kontinuierlich in den Hohlraum hinein und gibt dadurch die gespeicherte Flüssigkeit ebenfalls kontinuierlich in den Hohlraum ab, wo sie vom Flüssigkeitsstrom mitgerissen wird, ohne Belastungsspitzen für das Vakuum im Ansaugschlauch zu erzeugen. Ab einem bestimmten, durch die Bauweise und die Materialstärke sowie die Elastizität des Materials vorgegebenen Unterdruck ist die Ausstülpung vollständig in den Hohlraum des Zwischenstückes hineingestülpt und gibt dann keine weitere Flüssigkeitsmenge mehr ab.

Zwar bildet die Ausstülpung im Flüssigkeitsstrom einen Widerstand, was aber zum größten Teil dadurch kompensiert werden kann, dass im Bereich der Ausstülpung der Rohrquerschnitt soweit vergrößert wird, dass auch bei vollständig eingestülpter Ausstülpung noch die gleiche Strömungsfläche zur Verfügung steht, wie an der oberen Öffnung des Rückstandssammlers.

Die durch Verwirbelung im Bereich der nach innen ragenden Ausstülpung entstehenden, weiteren Verluste sind nicht sehr hoch und können durch entsprechende Formgebung reduziert werden. Vorteilhaft ist es z. B. die Ausstülpung als Kalotte zu gestalten, also als den Abschnitt einer Hohlkugel. Wenn diese Hohlkugel vollständig nach innen gestülpt ist, so bildet sie ein Kugelsegment, das in den Strom hineinragt.

Eine Kugel, die in eine Strömung hineinragt, erzeugt in ihrem Strömungsschatten einige kleine Wirbel. Diese Wirbelbildung kann dadurch spürbar reduziert werden, dass die Ausstülpung in Strömungsrichtung ein tropfenförmiges Profil erhält, das umgangssprachlich als "Stromlinienform" bekannt ist. Wenn die runde Seite des Tropfens sich der Strömung entgegenstellt, sorgt die spitze Seite des tropfenförmigen Querschnittes für einen fast wirbelfreien Ablauf der Strömung am Hindernis.

Die Ausstülpung kann alternativ wie ein Sack geformt sein. Denkbar ist, dass an das Ende des Sackes zusätzliche Ausbuchtungen oder Erweiterungen angeformt sind.

Für die Funktion des erfindungsgemäßen Rückstandssammlers ist es nötig, dass die Ausstülpung aus einem dauerhaft flexiblen Material besteht, sodass sie von ihrer Positivform in die Negativform umspringen kann und dabei dauerhaft gegen Flüssigkeit dicht ist. Geeignete Materialien sind alle flexiblen thermoplastischen Kunststoffe, Silikone, Gummi und wasserdichte Verbundwerkstoffe jeglicher Art: Denkbar sind auch Verbundmaterialien aus Federstahlstreifen, die Netz- oder Gitterartig in einen flüssigkeitsdichten Kunststoff oder in einen Verbundwerkstoff aus Kunststoff und textilem Material eingebettet ist.

Denkbar ist auch, dass die beiden Rohrstutzen und die Ausstülpung einstückig aus einem Material bestehen, welches eine gewisse Elastizität aufweist. Die Ausstülpung wird also in einer Einheit zusammen mit dem Rückstandssammler hergestellt. Alternativ kann sie als Einzelteil gefertigt werden, das dann in einen Rückstangssammler eingesetz wird. Wenn die Wandstärke der Ausstülpung erheblich geringer ist als im übrigen Bereich, dann bleiben die Wandungen der Rohrstutzen formstabil, während die Ausstülpung bereits bei retativ geringem Unterdruck nach innen hin wandert.

in jeder Konfiguration können bei einem erfindungsgemäßen Rückstandssammler die beiden Öffnungen so gestaltet werden, dass sie für verschiedene Schlauchdurchmesser geeignet sind. Dafür können die beiden Rohrstutzen an ihrem offenen Ende treppenartig oder schräg erweitert werden, wobei der Innendurchmesser jeder Stufe dem Außendurchmesser eines Unterdruckschlauches angepasst ist. In dieser Variante werden die Unterdruckschläuche in die Enden der beiden Rohrstutzen hinein geführt.

Alternativ können die beiden Rohrstutzen an ihrem offenen Ende treppenartig oder schräg im Durchmesser verkleinert und auf die Innendurchmesser von Unterdruckschläuchen angepasst werden. In dieser Variante werden die Unterdruckschläudhe über die Enden der beiden Rohrstutzen herüber geschoben. Mit beiden Varianten wird erreicht, dass ein Standardtyp von Rückstandssammler für mehrere Schlauchgrößen verwendbar wird.

In jedem Fall sollte die Aufnahmekapazität der Ausstülpung so groß gewählt werden, dass auch beim größten Schlauchquerschnitt noch das Sammeln der dann zu erwartenden Menge an Restflüssigkeit möglich ist.

Der Hohlraum eines erfindungsgemäßen Rückstandssammlers besteht im Prinzip aus zwei aneinander gesetzten und sich konstruktiv teilweise überdeckenden Rohrstutzen, wobei an einen der beiden Rohrstutzen eine Ausstülpung abgeformt ist. Dabei kann ein Rohrstutzen ein Rohrabschnitt mit einem kreisförmigen Querschnitt sein, der vollständig gerade verläuft. Alternativ kann der Rohrstutzen auch ganz oder teilweise gekrümmt sein, wobei die Krümmung ein Kreisbogensegment beschreibt. Oder das Rohrende ist zylindrisch geformt.

Das Prinzip eines erfindungsgemäßen Rückstandssammlers schließt jedoch auch Rohrstücke ein, die einen elliptischen, ovalen oder beliebigen Querschnitt haben. Selbst polygonale Querschnitte sind möglich, wegen erhöhtem Strömungswiderstand und aufwendiger Fertigung in der Praxis wahrscheinlich aber eher selten. Ebenso kann auch die Krümmung des Rohrstückes nicht nur ein Kreissegment sein, sondern auch ein Teil einer Ellipse oder eines Ovals oder einer beliebigen Krümmung. Die Krümmung kann auch durch anein-ander gesetzte Graden gebildet werden, also als Polygon geformt sein.

Ein wichtiger Grund dafür, den Rohrstutzen nicht über die gesamte Länge mit dem gleichen Querschnitt zu formen ist die Querschnitts-reduzierung durch die nach innen gestülpte Ausstülpung. Um diese Verengung etwas zu kompensieren, ist es sinnvoll, den Querschnitt im Bereich der Ausstülpung soweit zu vergrößern, dass er bei maximal in den Innenraum hinein gestülpten Ausstülpungen fast so groß oder etwas kleiner ist, wie die kleinere der beiden Öffnungen des Rückstandssammlers zum Anschluss des Unterdruckschlauches. Dann tritt durch den Venturi-Effekt, nämlich durch eine erhöhte Geschwindigkeit im Bereich der Ausstülpung, ein Unterdruck auf, der die Ausstülpung selbsttätig in den Innenraum hineinstülpt.

Denkbar ist es alternativ auch, dass der Querschnitt des Rückstandssammlers im Bereich der Ausstülpung so groß ist, dass er auch bei eingestülpter Ausstülpung.noch wenigstens so groß ist wie die kleinere Öffnung am Eintritt oder am Austritt des Rückstandssammlers. Dann wirkt allerdings bei strömendem Medium keine oder nur noch eine sehr geringe Kraft auf die Ausstülpung, die sie selbsttätig in den Innenraum hinein zöge, um sie dort zu entleeren.

Stattdessen müsste dann von außen auf die Ausstülpung gedrückt werden, um sie so zu entleeren. Zum Beispiel durch einen Druck mit dem Finger.

So ein Fingerdruck ist natürlich auch bei einer für selbsttätiges Entleeren dimensionierten Ausstülpung anwendbar. Damit könnte zum Beispiel bei langsam ansteigender Strömungsgeschwindigkeit durch den Sammler hindurch die Ausstülpung frühzeitig entleert werden.

Geringe Flüssigkeitsmengen können sich an der Innenwand des "oberen" Rohrstutzens in der Nähe der Öffnung zwischen den beiden Rohrstutzen sammeln und von dort durch Oberflächenhaftung an der Ausstülpung vorbei in den "unteren" Rohrstutzen gelangen und von dort - unerwünschter Weise - doch austreten. Um dem entgegen zu wirken, werden Rippen, Grate, Kerben oder Rinnen vorgeschlagen, die oberhalb der Öffnung zwischen den beiden Rohrstutzen beginnen und von dort aus schräg zur Längsachse des Rohrstutzens bis in die Nähe der Ausstülpung verlaufen. Am Ende dieser Fhrungselemente treten die kleinen Flüssigkeitsmengen aus, laufen ein kurzes Stück an der Innenwand des "oberen Rohrstutzen hinunter bis in die Ausstülpung ein und werden dort gesammelt.

Eine prinzipielle Eigenheit des erfindungsgemäßen Rückstands-sammlers ist, dass die Ausstülpung, welche die Restflüssigkeit aufnimmt, stets nach unten weisen muss, damit die Flüssigkeit von der Schwerkraft getrieben dort hinein läuft und verbleibt.

Für Anwendungsfälle, bei denen sich der Schlauch um seine Längsachse verdrehen kann, können auf einer oder auf beiden Seiten des Rückstandssammlers drehbare Kupplungen eingefügt werden, so das der Rückstandssammler unabhängig von eventuellen Drehungen des Schlauches in einer funktionsbereiten Position gehalten werden kann.

Wenn sich jedoch mit einem Verdrehen des Schlauches zwangsläufig auch die Orientierung eines in den Schlauch eingefügten Rückstandssammlers ändert, ist es sinnvoll, statt nur einem einzigen Rückstahdssammler mehrere Rückstandssammler mit jeweils verschiedener Ausrichtung der Ausstülpung miteinander zu kombinieren, so dass ein Mehrfachrückstandssammler gemäss Ansprüche 13-15 entsteht.

Ein Ausführungsbeispiel sind drei hintereinander aufgereihte Rückstandssammler, deren Ausstülpungen um jeweils etwa 120 ° gegeneinander versetzt sind. Dann ist auch bei sich tordierendem Unter-druckschlauch stets wenigstens eine Ausstülpung ganz oder teilweise nach unten gerichtet, sodass es möglich ist, darin die Restflüssigkeit aufzunehmen.

Falls diese Auffangkapazität noch nicht ausreicht, können weitere Rückstandssammler in den Unterdruckschlauch eingefügt werden, wobei jedoch zu beachten ist, dass durch das Hintereinanderschalten mehrerer Rückstandssammler ein recht länglither Aufbau entsteht. Wenn im ungünstigstem Fall nur der am weitesten vom Austritt entfernte Rückstandssammler die Restflüssigkeit aufnimmt, kann es passieren, dass sich im übrigen Bereich des Schlauches noch so viel Flüssigkeit sammelt, dass doch wieder eine - wenn auch sehr kleine - Flüssigkeitsmenge aus dem Unterdruckschlauch nach Abschalten des Vakuums austreten kann.

Deshalb ist es prinzipiell auch möglich, mehrere Rückstandssammler parallel zu schalten. Wenn sie sich sternartig um eine Längsachse gruppieren, ist stets wenigstens eine Ausstülpung nach unten gerichtet und kann Restflüssigkeiten aufnehmen. Für die Verbindung aller oberen Öffnungen und aller unteren Öffnungen sämtlicher Rückstandssammler kann eine kammerartige Aufweitung des Schlauches vorgesehen werden, die für jeden angesetzten Rückstandssammler eine Öffnung aufweist.

Alternativ können die Rohrstutzen jedes einzelnen Rückstands-sammlers schon bei der Konstruktion partiell miteinander verschmolzen werden, sodass das sie rippenartig aus dem Unterdruckschlauch herauswachsen und dann dicht aneinander liegende oder sogar ineinander übergehende Rückstandssammler mit je einer Ausstülpung bilden. Dadurch entsteht ein Mehrfachrückstandssammter, der kompakter und kostengünstiger ist als die Reihenschaltung mehrerer einzelner Rückstandssammler.

Bei der Auslegung solcher parallel geschalteten Rückstandssammler gilt es zu beachten, dass sich bei entsprechendem Unterdruck alle Ausstülpungen in den Innenraum zurückstülpen, wobei sich der Strömungsquerschnitt verkleinert. Vorzugsweise sollte der gesamte Querschnitt in allen einzelnen Rückstandssammlern nicht kleiner werden als die obere b.z.w. die untere Öffnung des Mehrfachrückstandssammlers.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1: Schnitt durch einen Rückstandssammler mit aufgesetzten Unterdruckschläuchen und Restflüssigkeiten
- Figur 2: Wie Figur 1, jedoch ohne Restflüssigkeit
- Figur 3: Perspektivische Darstellung des in Figur 1 und 2 geschnittenen Rückstandssammlers

Die Figuren zeigen im Einzelnen:

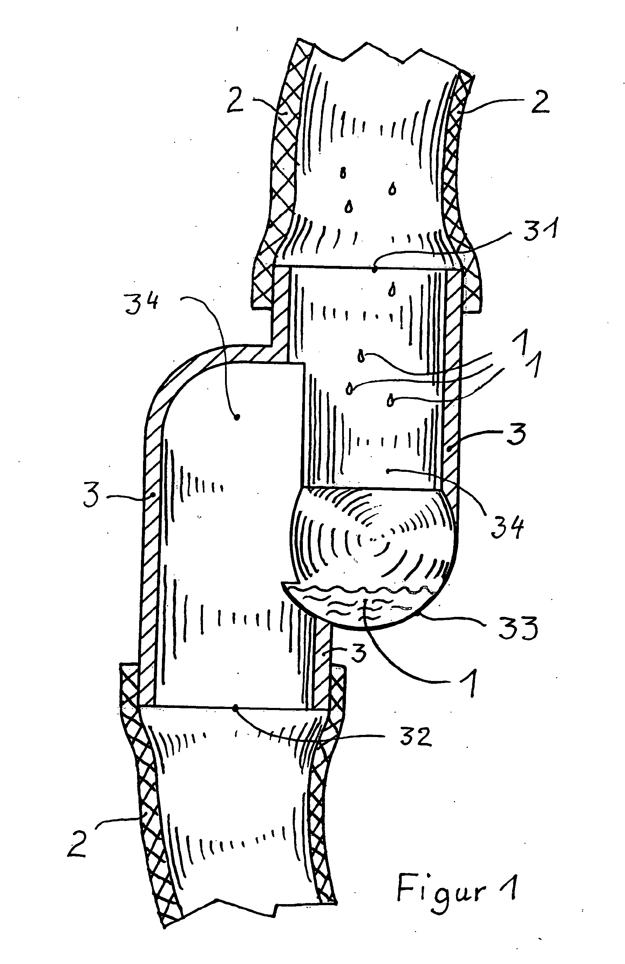

In **Figur 1** ist ein Rückstandssammler 3 dargestellt, der in Strömungsrichtung geschnitten ist und auf dessen obere Öffnung 31 ein Unterdruckschlauch 2 aufgesteckt ist, der nach oben weiterläuft und auf dessen untere Öffnung 32 das nach unten weisende Teilstück des Unterdruckschlauches 2 aufgesteckt ist. Figur 1 zeigt den Ruhezustand eines Unterdruckschlauches 2 kurze Zeit nach dem Abschalten des Unterdrucks, wobei aus dem oberen Unterdruckschlauch 2 noch etwas Restflüssigkeit 1 herabtropft und sich in der hier kalottenartigen Ausstülpung 33 des Rückstandssammlers 3 sammelt.

In Figur 1 ist erkennbar, dass in diesem Ausführungsbeispiel zwei Rohrstutzen so aneinander gefügt sind, dass ihre Längsachsen parallel zueinander verlaufen und die Querschnitte sich um etwa ein Fünftel des Durchmessers überlappen und beide Stutzen in ihrer Längsachse etwas gegeneinander verschoben sind.

In Figur 1 ist nachvollziehbar, dass die Ausstülpung 33 unterhalb der oberen Öffnung 31 liegt, sodass alle Restflüssigkeiten 1 entweder durch die obere Öffnung 31 und den Hohlraum 34 hindurch direkt in die Ausstülpung 33 fallen oder innen an der Wandung des Hohlraumes 34 entlang herunter gleiten, bis sie sich ebenfalls in der Ausstülpung 33 sammeln. Diese Restflüssigkeiten 1 sind in Figur 1 durch kleine Tropfen dargestellt.

In Figur 1 ist erkennbar, wie sich im unteren Teil der kalottenartigen Ausstülpung 33 Restflüssigkeit 1 sammelt, die hier durch Wellenlinien symbolisiert ist.

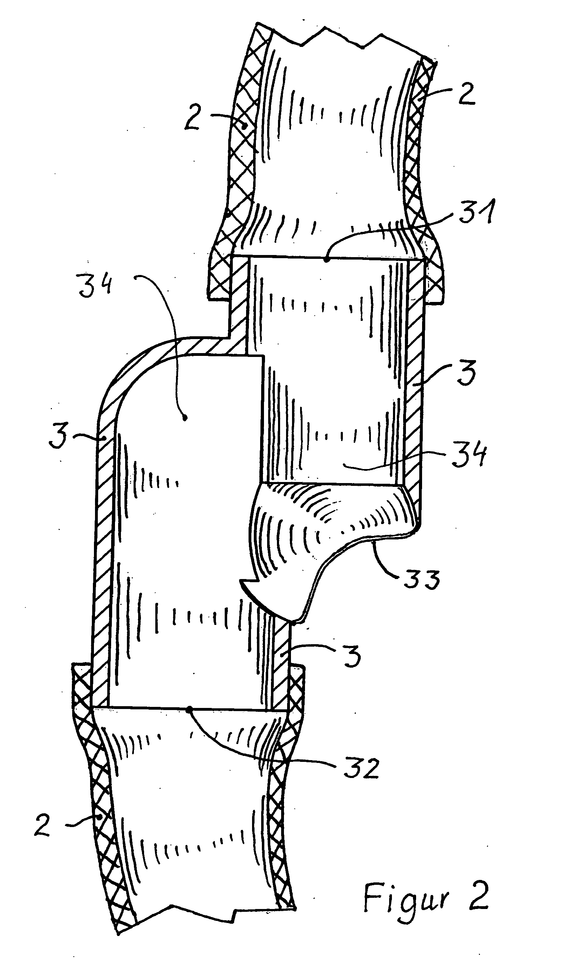

In **Figur 2** ist der Betriebszustand eines Unterdruckschlauches 2 mit einem erfindungsgemäßen Rückstandssammler wiedergegeben, der in Figur 1 im Ruhezustand gezeigt worden ist. Im Unterschied zum Ruhezustand ist im Betrieb die flexible Ausstülpung 33 durch den Unterdruck in den Hohlraum 34 des Rückstandssammlers 3 hinein gestülpt. In Figur 2 wird deutlich erkennbar, dass sich das innere Volumen der kalottenartigen Ausstülpung 33 dadurch stark verringert hat.

Im Vergleich zu Figur 1 hat sich die im Ruhezustand gesammelte Restflüssigkeit 1 durch das Einwärtsstülpen der Ausstülpung 33 in den Hohlraum des Rückstandssammler 3 entleert und ist von dort durch die Strömung in den oberen Unterdruckschlauch 2 hinein mitgerissen worden und selbst der sehr kleine Rest, der sich gemäß der Geometrie noch im links dargestellten Bereich der Ausstülpung 33 hätte halten können, ist ebenfalls durch die Strömung mitgerissen worden. Deshalb, ist in Figur 2 keine Restflüssigkeit 1 mehr zu sehen. Die im Betriebszustand hindurchströmende Flüssigkeit ist der Übersichtlichkeit halber nicht dargestellt.

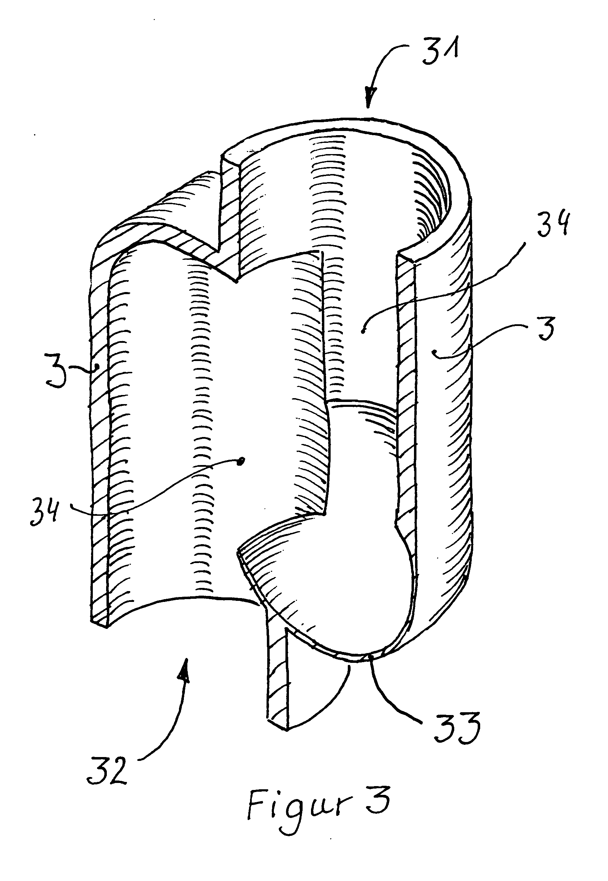

In **Figur 3** ist der in den Figuren 1 und 2 im Längsschnitt gezeigte Rückstandssammler 3 ebenfalls im gleichen Längsschnitt, hier jedoch perspektivisch dargestellt. In Figur 3 ist deutlich erkennbar, dass die hier, gezeigt Ausführungsform aus zwei, zum Teil ineinander greifenden Rohrstutzen konstruiert ist, wodurch sich in der Mitte des Hohlraumes 34 eine etwa rechteckige Öffnung ergibt, die die Innenräume der beiden Rohrstutzen miteinander verbindet.
Das eine Ende eines jeden Rohrstutzens bildet jeweils die Öffnung des Rückstandssammlers. Bei dem ersten Rohrstutzen mit der unteren Öffnung 32 ist das andere Ende verschlossen. Bei dem zweiten Rohrstutzen unter der oberen Öffnung 31 ist auf das freie Ende die erfindungsgemäße Ausstülpung 33 aufgesetzt, in diesem Beispiel ein Hohlkugelsegment, auch Kalotte genannt.

In Figur 3 ist klar zu erkennen, dass die angeformte, kalottenartigen Ausstülpung 33 eine deutlich geringere Wandstärke hat als die übrigen Bereiche des Rückstandssammlers 3. In Figur 3 ist deshalb gut nach-Vollziehbar, dass und wie sich die Ausstülpung 33 in den Hohlraum 34 hinein umfalten kann.

### Bezugszeichenliste

- 1: Restflüssigkeit im Unterdruckschlauch 2
- 2: Unterdruckschlauch, kann Restflüssigkeit 1 beinhalten
- 3: Rückstandssammler, in Unterdruckschlauch 2 eingefügt
- 31: obere Öffnung des Rückstandssammlers 3
- 32: untere Öffnung des Rückstandssammlers 3
- 33: Ausstülpung am Rückstandssammler 3
- 34: Hohlraum im Inneren des Rückstandssammlers 3

## Patentansprüche

1. Rückstandssammlen (3) für das Sammeln von Restflüssigkeit (1) aus einem Unterdruckschlauch (2), der senkrecht oder geneigt verläuft, bestehend aus zwei aneinander gesetzten Rohrstutzen, deren Innenräume miteinander in Verbindung stehen und einen Hohlraum (34) bilden, der
- über eine obere öffnung (31) mit dem nach oben weitergeführten Teil des Unterdruckschlauches (2) verbindbar ist und
- über eine untere Öffnung (32) mit dem nach unten weitergeführten Teil des Unterdruckschlauches (2) verbindbar ist, wobei
die Stirnseite des mit der unteren öffnung (32) verbundenen Rohrstutzens verschlossen ist und in die Stirnseite des mit der oberen Öffnung (31) verbundenen Rohrstutzens eine Ausstülpung (33) eingebracht ist, die nach außen ausgerichtet ist **dadurch gekennzeichnet, dass** das Material der Ausstülpung (33) derart flexibel und die Wandstärke der Ausstülpung (33) derart eingestellt ist, dass sie durch Unterdruck zumindest teilweise in den Hohlraum (34) einstülpbar ist.

2. Rückstandssammler (3) nach dem vorhergehenden Anspruch 1,
**dadurch gekennzeichnet, dass** die beiden Rohrstutzen als Hohlzylinder geformt sind.

3. Rückstandssammler (3) nach einem der vorhergehenden Ansprüche,
**dadurch gekennzeichnet, dass** die beiden Rohrstutzen gekrümmt sind.

4. Rückstandssammler (3) nach einem der vorhergehenden Ansprüche,
**dadurch gekennzeichnet, dass** die beiden Rohrstutzen um zwei zueinander parallele und gegeneinander versetzte Achsen gekrümmt sind.

5. Rückstandssammler (3) nach einem der vorhergehenden Ansprüche,
**dadurch gekennzeichnet, dass** die Ausstülpung (33) im Wesentlichen koaxial unterhalb der oberen Öffnung (31) angeordnet ist.

6. Rückstandssammler (3) nach einem der vorhergehenden Ansprüche,
**dadurch gekennzeichnet, dass** er aus einem dauerhaft elastischen Material besteht und die Wandstärke der Ausstülpung (33) deutlich geringer als die übrigen Wandstärken ist.

7. Rückstandssammler (3) nach einem der vorhergehenden Ansprüche,
**dadurch gekennzeichnet, dass** die Ausstülpung (33) als Kalotte geformt ist.

8. Rückstandssammler (3) nach einem der vorhergehenden Ansprüche,
**dadurch gekennzeichnet, dass** die Ausstülpung (33) parallel zur Durchströmungsrichtung des angrenzenden Rohrbereiches innerhalb des Zwischenstücks (3) einen tropfenförmigen Querschnitt aufweist, wobei die abgerundete Seite des Tropfens der Strömung entgegen weist.

9. Rückstandssammler (3) nach einem der vorhergehenden Ansprüche,
**dadurch gekennzeichnet, dass** der Rohrquerschnitt im Bereich der Ausstülpung (33) so weit vergrößert ist, dass bei vollständig einwärts gestülpter Ausstülpung (33) noch eine Querschnittsfläche verbleibt, die höchstens ebenso groß oder minimal kleiner ist, wie die obere Öffnung (31).

10. Rückstandssammler (3) nach einem der vorhergehenden Ansprüche,
**dadurch gekennzeichnet, dass** die obere Öffnung (31) und/oder die untere Öffnung (32) zum Anschluss an Unterdruckschläuche (2) mit verschiedenem Durchmesser geeignet sind.

11. Rückstandssammler (3) nach einem der vorhergehenden Ansprüche,
**dadurch gekennzeichnet, dass** an die obere Öffnung (31) und/oder die untere Öffnung (32) je eine Drehkupplung angesetzt ist.

12. Rückstandssammler (3) nach einem der vorhergehenden Ansprüche,
**dadurch gekennzeichnet, dass** auf der Innenfläche des Hohlraumes (34) im Bereich nahe der oberen Öffnung (31) Rinnen, Rippen, Kerben oder ähnliche Formelemente vorhanden sind, die schräg gegenüber der Längsachse des mit der oberen Öffnung (31) verbundenen Rohrstutzens verlaufen und deren am weitesten von der oberen Öffung (31) entferntester Punkt auch möglichst weit von der Öffnung zwischen den beiden Rohrstutzen entfernt ist.

13. Mehrfachrückstandssammler **dadurch gekennzeichnet, dass** er aus mehreren, hintereinander geschalteten Rückstandssammlern (3) nach einem der vorhergehenden Ansprüche besteht, von denen bei einem die Ausstülpung (33) nach unten weist und die anderen Ausstülpungen (33) in andere Richtungen weisen.

14. Mehrfachrückstandssammler nach dem vorhergehenden Anspruch 13. **dadurch gekennzeichnet, dass** er aus mehreren parallel geschalteten Rückstandssammlern (3) besteht.

15. Mehrfachrückstandssammler nach dem vorhergehenden Anspruch 14. **dadurch gekennzeichnet, dass** alle parallel geschalteten Rückstandssammler (3) miteinander zu einer gemeinsamen Baugruppen verschmolzen sind.

## Claims

1. Residue collector (3) for the collection of residual liquid (1) from a low-pressure tube (2), which extends vertically or inclined, consisting of two adjoining pipe nozzles, the interior spaces of which are in mutual connection and form a cavity (34), which
- via an orifice (31), can be connected to a part of the low-pressure tube (2), which extends upwardly, and
- can be connected via a lower orifice (32) to a downwardly extended portion of the low-pressure tube (2)
wherein
the end side of the pipe nozzle, which is connected to the lower orifice (32), is sealed and, into the end face of that pipe nozzle that is connected to the upper orifice (31), a bulge (33) is introduced, which is turned outwardly and the material of which is so flexible and its wall thickness designed such that it, at least partly, can be pushed into the hollow space (34) by virtue of the low pressure.

2. Residue collector (3) according to the preceding claim 1, **characterized in that** the two pipe nozzles are formed as a hollow cylinder.

3. Residue collector (3) according to one of the preceding claims, **characterized in that** the two pipe nozzles are curved.

4. Residue collector (3) according to one of the preceding claims, **characterized in that** the two pipe nozzles are curved around two axes which are parallel to one another and offset with respect to one another.

5. Residue collector (3) according to one of the preceding claims, **characterized in that** the bulge (33) is arranged essentially coaxially beneath the upper orifice (31).

6. Residue collector (3) according to one of the preceding claims, **characterized in that** it consists of a permanently elastic material and the wall thickness of the bulge (33) is significantly lower than the remaining wall thicknesses.

7. Residue collector (3) according to one of the preceding claims, **characterized in that** the bulge (33) is hemispherically shaped.

8. Residue collector 3 according to one of the preceding claims, **characterized in that** the bulge (33) has a drop-shaped cross-section within the intermediate piece (3) parallel to the through-flow direction of the adjacent pipe region, the rounded side of the drop facing counter to the flow.

9. Residue collector (3) according to one of the preceding claims, **characterized in that** the pipe cross-section in the region of the bulge (33) is enlarged such that, with the bulge (33) completely folded inward, a cross-sectional area remains that is at most just as large or at least smaller than the upper orifice (31).

10. Residue collector (3) according to one of the preceding claims, **characterised in that** the upper orifice (31) and/or the lower orifice (32) are suitable for connection to low-pressure tubes (2) with different diameters.

11. Residue collector (3) according to one of the preceding claims, **characterised in that** a rotary coupling is mounted on the upper orifice (31) and/or the lower orifice (32) in each case.

12. Residue collector (3) according to one of the preceding claims, **characterised in that** channels, ribs, notches or similar formed elements are present on the inner surface of the hollow space (34) in the region close to the upper orifice (31), which extend obliquely with respect to the longitudinal axis of the pipe nozzle that is connected to the upper orifice (31), and that point of which that is most remote from the upper orifice (31) is also as far as possible from the orifice between the two pipe nozzles.

13. Multiple residue collector according to one of the preceding claims, **characterised in that** it consists of a plurality of residue collectors (3) that are connected in series, whereof in one case the bulge (33) faces downwardly and the other bulges (33) face in other directions.

14. Multiple residue collector according to the preceding claim 13, **characterised in that** it consists of a plurality of residue collectors (3) that are connected in parallel.

15. Multiple residue collector according to the preceding claim 14, **characterised in that** all residue collectors (3), which are connected in parallel, are merged together into a common assembly..

## Revendications

1. Collecteur de résidus (3) destiné à collecter les résidus liquides (1) provenant d'un tuyau à dépression (2) qui suit un parcours vertical ou incliné, consistant en deux manchons de tuyaux posés l'un contre l'autre, dont les espaces intérieurs sont reliés entre eux en formant une cavité (34) qui
• peut être reliée par l'intermédiaire d'une ouverture supérieure (31) avec la partie qui est prolongée vers le haut du tuyau à dépression (2) et
• qui peut être reliée par l'intermédiaire d'une ouverture inférieure (32) avec la partie qui est prolongée vers le bas du tuyau à dépression (2)
**sachant que**
la face frontale du manchon de tuyau relié avec l'ouverture inférieure (32) est fermée et qu'une protubérance (33) a été placée dans la face frontale du manchon de tuyau relié avec l'ouverture supérieure (31), laquelle protubérance est dirigée vers l'extérieur - le matériau de la protubérance étant choisi avec une souplesse telle et l'épaisseur de la paroi de la protubérance (33) étant choisie de façon telle qu'elle peut être, au moins en partie, invaginée dans la cavité.

2. Collecteur de résidus (3) selon la revendication précédente 1, **caractérisé par le fait que** les deux manchons du tuyau ont été réalisés sous la forme de cylindres creux.

3. Collecteur de résidus (3) selon une des revendications précédentes, **caractérisé par le fait que** les deux manchons de tuyau ont une forme courbe.

4. Collecteur de résidus (3) selon une des revendications précédentes, **caractérisé par le fait que** les deux manchons de tuyau sont recourbés autour de deux axes parallèles et décalés l'un par rapport à l'autre.

5. Collecteur de résidus (3) selon une des revendications précédentes, **caractérisé par le fait que** la protubérance (33) est disposée pour l'essentiel de façon coaxiale en dessous de l'ouverture supérieure (31).

6. Collecteur de résidus (3) selon une des revendications précédentes, **caractérisé par le fait qu'**il consiste en un matériau durablement élastique et que l'épaisseur de la paroi de la protubérance (33) est nettement inférieure aux autres épaisseurs de paroi.

7. Collecteur de résidus (3) selon une des revendications précédentes, **caractérisé par le fait que** la protubérance (33) a la forme d'une calotte.

8. Collecteur de résidus (3) selon une des revendications précédentes, **caractérisé par le fait que** la protubérance (33) présente, parallèlement au sens de l'écoulement de la zone de tuyau avoisinante à l'intérieur de la pièce intermédiaire (3), une section en forme de goutte, sachant que le côté arrondi de la goutte du flux est dirigée dans le sens inverse à celui de l'écoulement.

9. Collecteur de résidus (3) selon une des revendications précédentes, **caractérisé par le fait que** la section du tuyau dans la zone de la protubérance (33) est agrandie de façon telle que, lorsque la protubérance (33) est entièrement invaginée vers l'intérieur, il reste encore une surface de section qui est au plus aussi grande et au minimum plus petite que l'ouverture supérieure (31).

10. Collecteur de résidus (3) selon une des revendications précédentes, **caractérisé par le fait que** l'ouverture supérieure (31) et/ou l'ouverture inférieure (32) sont adaptées pour pouvoir se raccorder à des tuyaux à dépression (2) ayant différents diamètres.

11. Collecteur de résidus (3) selon une des revendications précédentes, **caractérisé par le fait qu'**un coupleur rotatif est disposé sur l'ouverture supérieure (31) et/ou l'ouverture inférieure (32).

12. Collecteur de résidus (3) selon une des revendications précédentes, **caractérisé par le fait qu'**il y a, sur la surface intérieure de la cavité (34) dans la zone de l'ouverture supérieure (31), des rainures, des nervures, des encoches ou autres éléments formés qui suivent un parcours en biais par rapport à l'axe longitudinal du manchon de tuyau relié avec l'ouverture supérieure (31) et dont le point le plus éloigné de l'ouverture supérieure (31) est également le plus éloigné de l'ouverture située entre les deux manchons de tuyau.

13. Collecteur de résidus multiple selon une des revendications précédentes, **caractérisé par le fait qu'**il consiste en plusieurs collecteurs de résidus (33) branchés les uns derrières les autres, dont l'un présente une protubérance (33) dirigée vers le bas, les protubérances des autres étant dirigées dans d'autres directions.

14. Collecteur de résidus multiple selon la revendication précédente, **caractérisé par le fait qu'**il consiste en plusieurs collecteurs (3) branchés parallèlement.

15. Collecteur de résidus multiple selon la revendication précédente, **caractérisé par le fait que** tous les collecteurs de résidus (3) branchés parallèlement sont fusionnés en un sous-ensemble commun.
